# EUROPEAN PATENT SPECIFICATION

(11) **EP 3 324 077 B1**
(45) Date of publication and mention of the grant of the patent: **18.09.2019**
(21) Application number: 16824387.1
(22) Date of filing: 07.07.2016
(51) Int. Cl.: F16H 25/22, F16H 25/24

(54) **BALL SCREW, MACHINE TOOL, AND CONVEYING DEVICE**
KUGELGEWINDE, WERKZEUGMASCHINE UND FÖRDERVORRICHTUNG
VIS À BILLES, MACHINE-OUTIL, ET DISPOSITIF DE TRANSPORT

(30) Priority: 14.07.2015 JP 2015140705
(43) Date of publication of application: 23.05.2018
(73) Proprietor: NSK Ltd., Tokyo 141-8560 (JP)
(72) Inventor: MORIYAMA, Masahito, Fujisawa-shi Kanagawa 252-0811 (JP)
(74) Representative: Rings, Rolf
(86) International application number: PCT/JP2016/070177
(87) International publication number: WO 2017/010407

(56) References cited:
- EP-A2- 1 486 690
- CH-A5- 685 513
- JP-A- S5 440 951
- JP-A- H04 285 352
- JP-A- 2008 163 968
- JP-A- 2010 190 367
- US-A- 5 555 770
- US-A1- 2010 101 343

## Description

### Technical Field

The present invention relates to a ball screw and a machine tool and a conveying device that use the ball screw.

### Background Art

A ball screw includes a nut with a helical groove formed on the inner peripheral surface thereof, a screw shaft with a helical groove formed on the outer peripheral surface thereof, and a ball return path for returning balls placed on a track formed between the helical groove of the nut and the helical groove of the screw shaft from the end point to the starting point of the track. In the ball screw having this configuration, the balls roll through the track, thereby the nut moves relatively to the screw shaft. Most ball screws adopt a return tube type ball return path because of its easy assembly.

There is conventionally known a technology regarding a nut rotation type ball screw used in a clamping device of an injection molding machine and the like.

In this type of ball screw, if the outer peripheral surface of a nut is cut to provide a ball return path, when the nut rotates at high speed, its structure is the same as one with an eccentric weight, and therefore, the nut may lose its balance and whirl, and increase the vibration. As a result, for example, biting of balls is likely to occur, which may lead to a contingency that the nut is locked in a screw shaft.

Accordingly, to keep the balance of such a nut member when the nut member rotates at high speed, a ball screw including a nut provided with a tube that forms a thin ball return path has been disclosed (see, PTL 1).

### Citation List

### Patent Literature

PTL 1: JP H11-344094 A

Patent document CH 685 513 A5, which shows all the features of the preamble of claim 1, discloses a ball screw device with a screw shaft with a helical groove and a tube-shaped nut body with a helical groove, which includes a rolling body guide path between the nut and the screw shaft. This known device according to CH 685 513 A5 is provided with a helical spring inserted between the rolling body guide path and the inner surface of the tube-shaped nut body.

### Summary of Invention

### Technical Problem

In the ball screw according to PTL 1, making a ball return path thin is a measure to improve the eccentricity; however, with increase in the rotation speed of the nut, the centrifugal force increases, which results in strength poverty; therefore, this is unsuited for high rotation speed.

Furthermore, in the ball screw according to PTL 1, if the track is a one-lane track, the tube is installed only on one side of a screw shaft in a radial direction; therefore, to suppress the vibration when the nut rotates at high speed, a counter weight or the like needs to be provided on the opposite side of the tube in a radial direction. As a result, the manufacturing cost may be further increased.

The present invention has been made in view of the above problem, and an object of the invention is to provide a ball screw, a machine tool, and a conveying device that achieve the suppression of the vibration even when the nut rotates at high speed and the reduction of the manufacturing cost.

### Solution to Problem

This problem is solved by means of a ball screw device with all the features of claim 1. Preferred forms of realization of the invention are defined in the dependent claims.

An aspect of a ball screw for achieving the above object is that the ball screw includes a screw shaft with a helical groove formed on its outer peripheral surface; a tube-shaped nut body with a helical groove formed on its inner peripheral surface; rolling bodies configured to be placed in a load rolling path formed by the helical groove of the screw shaft and the helical groove of the nut body, a rolling-body guidepath communicated with the load rolling path, and a rolling-body return path communicated with the load rolling path and the rolling-body guidepath; circulation members configured to have the rolling-body guidepath formed inside and be installed on both ends of the nut body in an axial direction; and a synthetic-resin covering member configured to be shaped into a tube arranged coaxially with the nut body to cover an outer peripheral surface of the nut body, and a groove part formed on its inner peripheral surface and the outer peripheral surface of the nut body form the rolling-body return path. The covering member is provided with an engagement part engaged with a cutout part formed on outer peripheral surfaces of the circulation members or the outer peripheral surface of the nut body to prevent the covering member from rotating in a circumferential direction.

Here, in the above-described ball screw, the covering member is composed of a plurality of divided bodies into which the covering member is divided in the circumferential direction.

Furthermore, in the above-described ball screw, the cutout part can include a pair of cutout parts formed on the circulation members or the nut body in a radial direction.

Moreover, an aspect of a machine tool for achieving the above object is that the machine tool includes a ball screw; the ball screw includes a screw shaft with a helical groove formed on its outer peripheral surface; a tube-shaped nut body with a helical groove formed on its inner peripheral surface; rolling bodies configured to be placed in a load rolling path formed by the helical groove of the screw shaft and the helical groove of the nut body, a rolling-body guidepath communicated with the load rolling path, and a rolling-body return path communicated with the load rolling path and the rolling-body guidepath; circulation members configured to have the rolling-body guidepath formed inside and be installed on both ends of the nut body in an axial direction; and a synthetic-resin covering member configured to be shaped into a tube arranged coaxially with the nut body to cover an outer peripheral surface of the nut body, and a groove part formed on its inner peripheral surface and the outer peripheral surface of the nut body form the rolling-body return path. The covering member is provided with an engagement part engaged with a cutout part formed on outer peripheral surfaces of the circulation members or the outer peripheral surface of the nut body to prevent the covering member from rotating in a circumferential direction.

Here, in the above-described machine tool, the covering member is composed of a plurality of divided bodies into which the covering member is divided in the circumferential direction.

Furthermore, in the above-described machine tool, the cutout part can include a pair of cutout parts formed on the circulation members or the nut body in a radial direction.

Moreover, an aspect of a conveying device for achieving the above object is that the conveying device includes a ball screw; the ball screw includes a screw shaft with a helical groove formed on its outer peripheral surface; a tube-shaped nut body with a helical groove formed on its inner peripheral surface; rolling bodies configured to be placed in a load rolling path formed by the helical groove of the screw shaft and the helical groove of the nut body, a rolling-body guidepath communicated with the load rolling path, and a rolling-body return path communicated with the load rolling path and the rolling-body guidepath; circulation members configured to have the rolling-body guidepath formed inside and be installed on both ends of the nut body in an axial direction; and a synthetic-resin covering member configured to be shaped into a tube arranged coaxially with the nut body to cover an outer peripheral surface of the nut body, and a groove part formed on its inner peripheral surface and the outer peripheral surface of the nut body form the rolling-body return path. The covering member is provided with an engagement part engaged with a cutout part formed on outer peripheral surfaces of the circulation members or the outer peripheral surface of the nut body to prevent the covering member from rotating in a circumferential direction.

Here, in the above-described conveying device, the covering member is composed of a plurality of divided bodies into which the covering member is divided in the circumferential direction.

Furthermore, in the above-described conveying device, the cutout part can include a pair of cutout parts formed on the circulation members or the nut body in a radial direction.

### Advantageous Effects of Invention

According to one aspect of the present invention, it is possible to provide a ball screw, a machine tool, and a conveying device that achieve the suppression of the vibration even when the nut rotates at high speed and the reduction of the manufacturing cost.

### Brief Description of Drawings

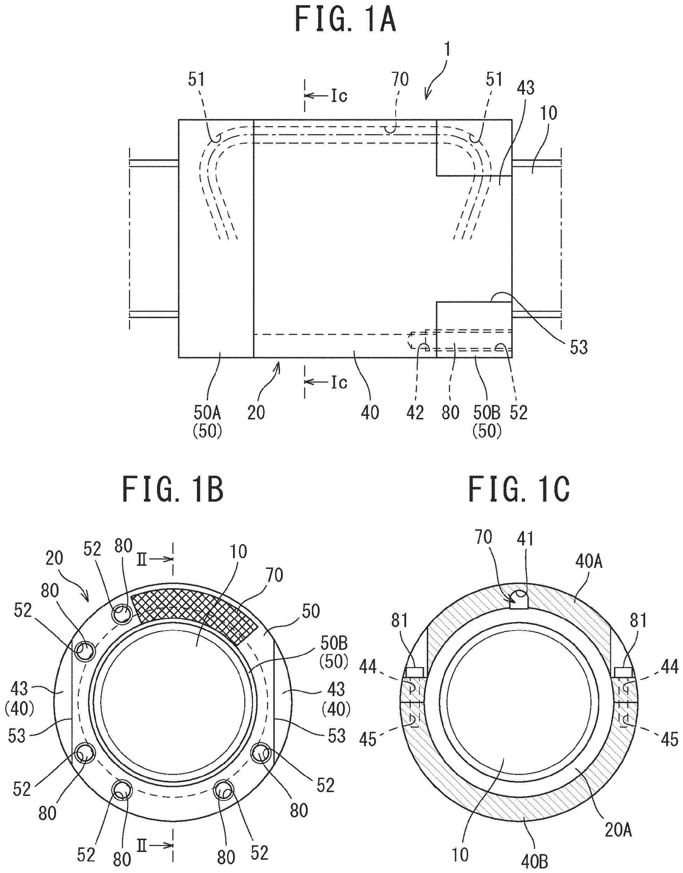

FIGS. 1A to 1C are diagrams illustrating a configuration of a ball screw according to a first embodiment, and FIG. 1A is a side view of the ball screw, FIG. 1B is a back view of the ball screw, FIG. 1C is a cross-sectional view of the ball screw illustrated in FIG. 1A along the line Ic-Ic;

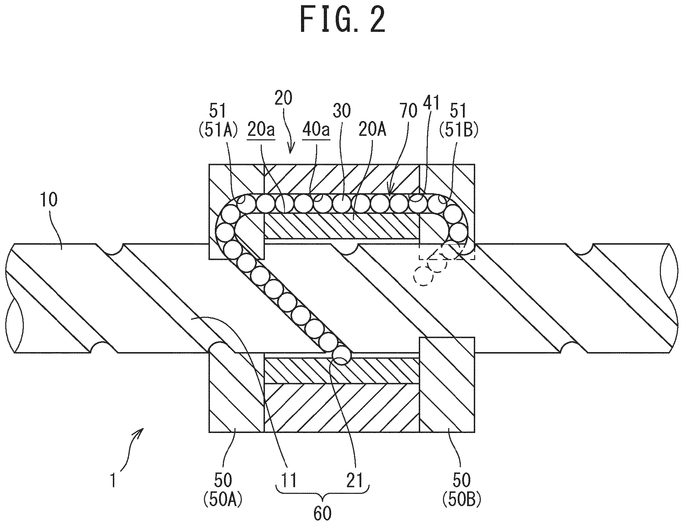

FIG. 2 is a cross-sectional view of the ball screw illustrated in FIG. 1B along the line II-II;

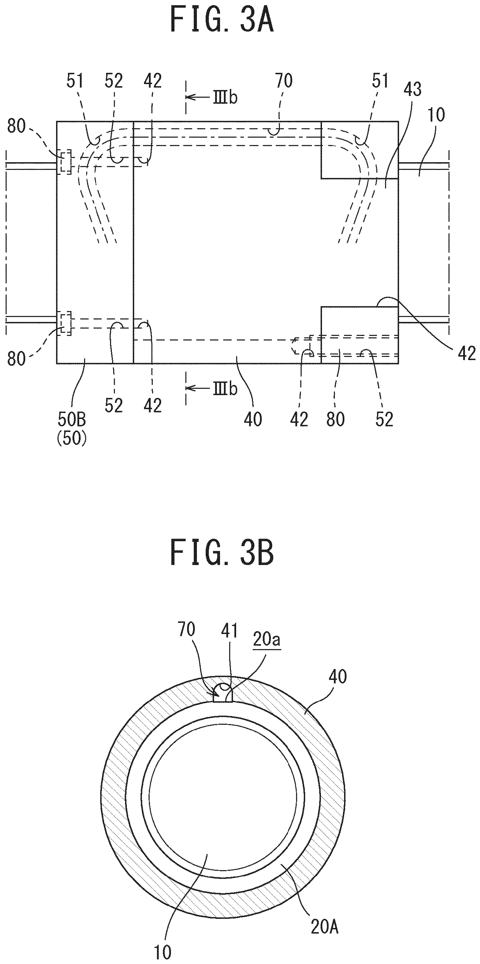

FIGS. 3A and 3B are diagrams illustrating a configuration of a ball screw according to a second embodiment which does not form part of the claimed invention, and FIG. 3A is a side view of the ball screw, FIG. 3B is a cross-sectional view of the ball screw illustrated in FIG. 3A along the line IIIb-IIIb;

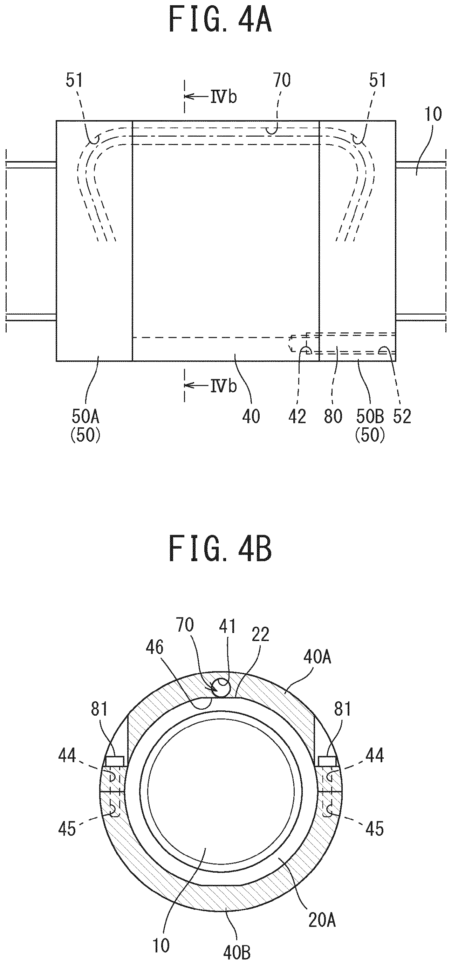

FIGS. 4A and 4B are diagrams illustrating a configuration of a ball screw according to a third embodiment which does not form part of the claimed invention, and FIG. 4A is a side view of the ball screw, FIG. 4B is a cross-sectional view of the ball screw illustrated in FIG. 4A along the line IVb-IVb; and

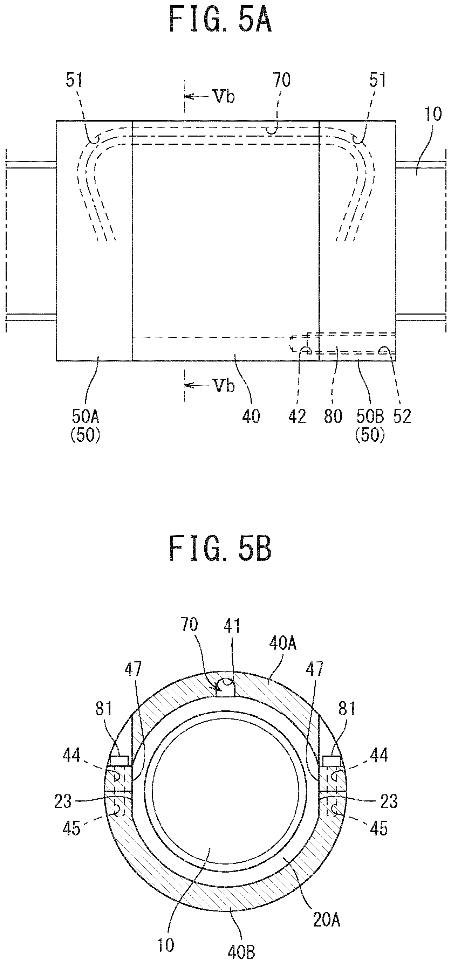

FIGS. 5A and 5B are diagrams illustrating a configuration of a ball screw according to a fourth embodiment which does not form part of the claimed invention, and FIG. 5A is a side view of the ball screw, FIG. 5B is a cross-sectional view of the ball screw illustrated in FIG. 5A along the line Vb-Vb.

### Description of Embodiments

Embodiments of a ball screw according to the present invention will now be described with reference to the drawings.

In the following detailed description, many particulars are described so as to provide complete understanding of the embodiments of the present invention. Furthermore, for simplicity of drawings, the well-known structures and devices are illustrated schematically.

### (First Embodiment)

As illustrated in FIGS. 1 and 2, a ball screw 1 in a first embodiment includes a screw shaft 10, a nut 20, and balls 30 as a rolling body.

The screw shaft 10 is a rod-like member made of steel material such as alloy steel, and has a helical groove 11 formed on the outer peripheral surface thereof.

The nut 20 includes a nut body 20A, a covering member 40, and a circulation member 50. The nut body 20A is a tubular member that is made of steel material such as alloy steel and of which the cross-section perpendicular to the shaft is formed into a barrel shape, and is arranged on the side of the outer periphery of the screw shaft 10. On the inner peripheral surface of the nut body 20A, a helical groove 21 facing the helical groove 11 of the screw shaft 10 is formed. That is, the helical groove 11 of the screw shaft 10 and the helical groove 21 of the nut 20 are formed in the same lead of helix.

The balls 30 are, for example, a spherical object made of steel material such as alloy steel, and are rollably loaded in a load rolling path 60 formed between the helical groove 11 of the screw shaft 10 and the helical groove 21 of the nut 20. That is, in the ball screw 1, the balls 30 roll through the load rolling path 60 in accordance with the rotational motion of the nut 20 with respect to the screw shaft 10. The nut 20 is configured to linearly move along an axial direction of the screw shaft 10 through the rolling of the balls 30.

The covering member (hereinafter may be referred to as the "jacket part") 40 is made of synthetic resin or the like, and, just like the nut body 20A, is a tubular member of which the cross-section perpendicular to the shaft is formed into a barrel shape, and is coaxially arranged on the side of the outer periphery of the nut body 20A. The diameter of the inner peripheral surface of the covering member 40 in an axial direction (the inner diameter of the covering member 40) is set to be greater than the diameter of the outer peripheral surface of the nut body 20A in an axial direction (the outer diameter of the nut body 20A). Then, as illustrated in FIGS. 1 and 2, on an inner peripheral surface 40a of the covering member 40, a groove part 41 having a cross-section that is big enough for the balls 30 to fit inside is formed along the axial direction of the screw shaft 10; this groove part 41 and an outer peripheral surface 20a of the nut body 20A form a ball return path (a rolling-body return path) 70. Here, as the above-mentioned synthetic resin, polyacetal (POM) resin, polycarbonate (PC) resin, or polybutylene terephthalate (PBT) resin is used.

The circulation member 50 has, as illustrated in FIG. 2, a ball guidepath (a rolling-body guidepath) 51 formed inside thereof. The ball guidepath 51 is a passage communicating the load rolling path 60 with the ball return path 70; the balls 30 having moved to one end of the ball guidepath 51 are scooped up from the inside of the load rolling path 60, and, from the other end, the scooped balls 30 are returned to the inside of the load rolling path 60 through the ball return path 70.

Accordingly, the balls 30 infinitely circulate through the ball guidepath 51, the load rolling path 60, and the ball return path 70 in accordance with the rotational motion of the nut 20 with respect to the screw shaft 10. That is, the ball guidepath 51, the load rolling path 60, and the ball return path 70 form an infinite circulation passage of the balls 30.

Incidentally, as illustrated in FIGS. 1A and 1B, the circulation member 50 is provided with a plurality of (in the present embodiment, six) through holes 52 bored through the circulation member 50 along the axial direction of the screw shaft 10 in a circumferential direction of the circulation member 50. Then, an end of the covering member 40 in the axial direction communicated with the through holes 52 is also provided with screw holes 42 corresponding to the through holes 52. Therefore, by screwing a fixing member 80, such as a bolt, into each through hole 52 and its corresponding screw hole 42, the circulation member 50 is fixed to the covering member 40.

In this way, in the ball screw 1 according to the present embodiment, the nut body 20A has a reduced diameter compared to conventional ones, and the covering member 40 is installed on the outer periphery of the nut body 20A. That is, the diameter of the nut body 20A made of steel material such as alloy steel is made smaller, and the nut body 20A is covered with the covering member 40 made of synthetic resin, and further, an internal circulation system is adopted. Therefore, it is possible to reduce the moment of inertia of the ball screw 1 even when the nut 20 rotates at high speed. Specifically, the density of the alloy steel used in at least either the nut body 20A or the balls 30 is preferably 7 to 8 cm³/g. Furthermore, the density of the synthetic resin (POM, PC, PBT, or the like) is preferably 1.2 to 1.5 cm³/g. By defining the density of the alloy steel and the density of the synthetic resin in this way, the moment of inertia of the ball screw 1 can be reduced.

Here, when the nut 20 of the ball screw in the present embodiment rotates, the rotating force of the balls 30 in the infinite circulation passage (circuit) increases. As a result, the inertial force caused by the rotation of the balls 30 makes the covering member 40 more likely to rotate in a circumferential direction. Accordingly, as illustrated in FIGS. 1A and 1B, at least either one of the circulation members 50 installed on both ends of the nut body 20A in the axial direction is provided with a cutout part 53 that divides the circulation member 50 in its circumferential direction. It is preferable to provide a pair of cutout parts 53 in a radial direction of the nut body 20A. Then, on the covering member 40, an engagement part 43 engaged with this cutout part 53 runs along the axial direction of the screw shaft 10. That is, not only is the covering member 40 installed so as to cover the nut body 20A, but the engagement part 43 engaged with the cutout part 53 is provided on the covering member 40, thereby the covering member 40 can be inhibited from rotating in the circumferential direction.

Furthermore, the covering member 40 is divided into two divided bodies 40A and 40B so as to divide the engagement part 43. By configuring the covering member 40 like this, the nut body 20A and the circulation members 50 (50A and 50B) can be easily attached.

Incidentally, on the contact side of the divided body 40A in contact with the divided body 40B, through holes 44 and 44 are formed on near both ends of the divided body 40A in the circumferential direction; on the contact side of the divided body 40B in contact with the divided body 40A, screw holes 45 and 45 communicated with the through holes 44 and 44 are formed on near both ends of the divided body 40B in the circumferential direction.

That is, the procedure of installing the covering member 40 in the present embodiment is that, first, the divided bodies 40A and 40B are installed so as to cover the nut body 20A and bring engagement parts 43A and 43B into contact with each other, thereby forming the engagement part 43. Then, by engaging the engagement part 43 with the cutout part 54 and screwing a fixing member 81, such as a bolt, into the through hole 44 and the screw hole 45, the divided bodies 40A and 40B can be fixed and formed into the covering member 40. After that, the fixing member 80, such as a bolt, is screwed into the through hole 52 of each of the circulation members 50A and 50B and its corresponding screw hole 42 of the covering member 40, thereby the circulation members 50A and 50B are fixed to the covering member 40, and the ball screw 1 is made up.

### (Second Embodiment)

Subsequently, a second embodiment of a ball screw, which does not form part of the claimed invention, is described with reference to the drawings. Incidentally, in the present embodiment, the same member or part as that in the above-described first embodiment is assigned the same reference numeral, and overlapping description of the member or part is omitted. That is, the ball screw in the present embodiment has the same structure as that in the first embodiment, except that the shape of a covering member of the ball screw in the present embodiment is modified.

As illustrated in FIGS. 3A and 3B, in the ball screw 1 according to the present embodiment, the shape of the covering member 40 is not "divided bodies" but an undivided cylindrical shape.

That is, the procedure of installing the covering member 40 in the present embodiment is that, first, the covering member 40 is moved in the axial direction so as to cover the nut body 20A and put the nut body 20A inside, and also the engagement part 43 is engaged with the cutout part 53 of the circulation member 50B. Then, the fixing member 80, such as a bolt, is screwed into the through hole 52 of the circulation member 50B and its corresponding screw hole 42 of the covering member 40, thereby the circulation member 50B is fixed to the covering member 40. After that, the fixing member 80, such as a bolt, is screwed into the through hole 52 of the circulation member 50A and its corresponding screw hole 42 of the covering member 40, thereby the circulation member 50A is fixed to the covering member 40, and the ball screw 1 is made up.

In this way, the shape of the covering member 40 is not "divided bodies" but an undivided cylindrical shape, thereby it is possible to smoothly perform the work of installing the covering member 40 to the nut body 20A and fixing the circulation members 50A and 50B to the covering member 40.

### (Third Embodiment)

Subsequently, a third embodiment of a ball screw, which does not form part of the claimed invention, is described with reference to the drawings. Incidentally, in the present embodiment, the same member or part as that in the above-described first embodiment is assigned the same reference numeral, and overlapping description of the member or part is omitted. That is, the ball screw in the present embodiment has the same structure as that in the first embodiment, except that the ball screw in the present embodiment is provided with neither a cutout part nor an engagement part, and has a shape in which the covering member is engaged with the nut body.

As illustrated in FIGS. 4A and 4B, in the ball screw 1 according to the present embodiment, cutout parts 22 and 22 are formed on portions of the nut body 20A corresponding to the bottoms of the divided bodies 40A and 40B in the circumferential direction, respectively. Then, the divided bodies 40A and 40B are provided with engagement parts 46A and 46B engaged with the cutout parts 22 and 22, respectively. Here, the "bottoms" of the divided bodies 40A and 40B mean intermediate parts of cross-sections of the divided bodies 40A and 40B, respectively.

In this way, the nut body 20A is provided with the cutout parts 22, and the divided bodies 40A and 40B are provided with the engagement parts 46 engaged with the cutout parts 22, respectively; therefore, without having to go to the trouble of a process to provide a cutout part and an engagement part, the covering member 40 can be fixed to the nut body 20A through the rolling bodies 30 so as not to rotate in the circumferential direction.

### (Fourth Embodiment)

Subsequently, a fourth embodiment of a ball screw, which does not form part of the claimed invention, is described with reference to the drawings. Incidentally, in the present embodiment, the same member or part as that in the above-described first embodiment is assigned the same reference numeral, and overlapping description of the member or part is omitted. That is, the ball screw in the present embodiment has the same structure as that in the first embodiment, except that the ball screw in the present embodiment is provided with neither a cutout part nor an engagement part, and has a shape in which the covering member is engaged with the nut body, just like the third embodiment.

As illustrated in FIGS. 5A and 5B, in the ball screw 1 according to the present embodiment, cutout parts 23 and 23 are formed on portions of the nut body 20A corresponding to contact portions of the divided bodies 40A and 40B in the circumferential direction, respectively. Then, the divided bodies 40A and 40B are provided with engagement parts 47A and 47B engaged with the cutout parts 23 and 23, respectively.

In this way, the nut body 20A is provided with the cutout parts 23, and the divided bodies 40A and 40B are provided with the engagement parts 47 engaged with the cutout parts 23, respectively; therefore, without having to go to the trouble of a process to provide a cutout part and an engagement part, the covering member 40 can be fixed to the nut body 20A through the rolling bodies 30 so as not to rotate in the circumferential direction.

As described above, in the ball screw according to the present invention, the nut body 20A has a reduced diameter compared to conventional ones, and the covering member 40 is installed on the outer periphery of the nut body 20A, and an internal circulation system is adopted; therefore, it is possible to provide a ball screw that achieves the reduction of the moment of inertia even when the nut 20 rotates at high speed and the reduction of the manufacturing cost.

The ball screw according to the present invention can be applied to, for example, a long machining center and a long conveying device. The term "long" here means, for example, an entire length of the ball screw is about forty or more times as large as the diameter of a screw shaft of the ball screw.

Furthermore, the ball screw according to the present invention can be applied to, for example, a machine tool, such as an injection molding machine, and a conveying device. In particular, the ball screw according to the present invention is suitable to be applied to a rolling device for machine tool to which a high load is applied, such as an injection drive shaft and a clamping mechanism driving unit of an electric injection molding machine or an electric press.

The present invention is described above with reference to the specific embodiments; however, this description is not intended to limit the invention.

For example, in the above-described embodiments, the infinite circulation passage of the balls is a one-lane passage; however, it can be configured to be a two-lane passage. Furthermore, the cutout part and the engagement part can be provided in any place of the nut body and the covering member in the circumferential direction. Moreover, the rolling bodies can be not balls but, for example, rollers.

### Reference Signs List

- 1: ball screw
- 10: screw shaft
- 11: helical groove (of screw shaft)
- 20: nut
- 20a: outer peripheral surface (of nut)
- 20A: nut body
- 21: helical groove (of nut)
- 22: cutout part
- 23: cutout part
- 30: rolling body (ball)
- 40: covering member
- 40a: inner peripheral surface (of covering member)
- 40A, 40B: divided body
- 41: groove part
- 42: screw hole
- 43: engagement part
- 44: through hole
- 45: screw hole
- 46: engagement part
- 47: engagement part
- 50: circulation member
- 51: ball guidepath
- 52: through hole
- 53: cutout part
- 60: load rolling path
- 70: ball return path
- 80: fixing member
- 81: fixing member

## Claims

1. A ball screw (1) comprising:
a screw shaft (10) with a helical groove (11) formed on its outer peripheral surface;
a tube-shaped nut body (20A) with a helical groove (21) formed on its inner peripheral surface;
rolling bodies (30) configured to be placed in a load rolling path formed by the helical groove (11) of the screw shaft (10) and the helical groove (21) of the nut body (20A), a rolling-body guidepath (51) communicated with the load rolling path (60), and a rolling-body return path (70) communicated with the rolling-body guidepath (51);
circulation members (50) configured to have the rolling-body guidepath (51) formed inside and be installed on both ends of the nut body (20A) in an axial direction; and
a synthetic-resin covering member (40) configured to be shaped into a tube arranged coaxially with the nut body (20A) to cover an outer peripheral surface of the nut body (20A), a groove part (41) formed on its inner peripheral surface and the outer peripheral surface of the nut body (20A) forming the rolling-body return path (70),
wherein the covering member (40) is provided with an engagement part (43) engaged with a cutout part (53) formed on outer peripheral surfaces of the circulation members (50) or the outer peripheral surface of the nut body (20A) to prevent the covering member (40) from rotating in a circumferential direction,
**characterized in that**
the covering member (40) is composed of a plurality of divided bodies (40A, 40B) into which the covering member (40) is divided in the circumferential direction.

2. The ball screw (1) according to claim 1, wherein the cutout part (53) includes a pair of cutout parts formed on the circulation members (50) or the nut body (20A) in a radial direction.

3. A machine tool including the ball screw (1) according to claim 1 or 2.

4. A conveying device including the ball screw (1) according to claim 1 or 2.

## Patentansprüche

1. Kugelumlaufspindel (1), umfassend:
eine Schraubenwelle (10) mit einer spiralförmigen Nut (11), die an ihrer Außenumfangsfläche ausgebildet ist;
einen rohrförmigen Mutterkörper (20A) mit einer spiralförmigen Nut (21), die an seiner Innenumfangsfläche ausgebildet ist;
Rollkörper (30), die so konfiguriert sind, dass sie in einem Laderollpfad platziert werden können, der durch die schraubenförmige Nut (11) der Schraubenwelle (10) und die schraubenförmige Nut (21) des Mutterkörpers (20A), einem Rollkörperführungspfad (51), der mit dem Laderollpfad (60) verbunden ist, und einem Rollkörperrückführpfad (70), der mit dem Rollkörperführungspfad (51) verbunden ist, gebildet wird;
Umlaufselemente (50), die so konfiguriert sind, dass der Wälzkörperführungspfad (51) innerhalb des Mutterkörpers (20A) ausgebildet und an beiden Enden in axialer Richtung installiert ist; und
ein Kunstharz-Abdeckelement (40), das konfiguriert ist, um zu einem Rohr geformt zu werden, das koaxial mit dem Mutterkörper (20A) angeordnet ist, um eine Außenumfangsfläche des Mutterkörpers (20A) abzudecken, wobei ein Nutteil (41), der an seiner Innenumfangsoberfläche ausgebildet ist, und die Außenumfangsoberfläche des Mutterkörpers (20A) den Rollkörperrückführpfad (70) bilden,
wobei das Abdeckelement (40) mit einem Eingriffsteil (43) versehen ist, der mit einem Ausschnittteil (53) in Eingriff steht, der an Außenumfangsflächen der Umlaufelemente (50) oder der Außenumfangsfläche des Mutterkörpers (20A) ausgebildet ist, um zu verhindern, dass das Abdeckelement (40) sich in Umfangsrichtung dreht,
**dadurch gekennzeichnet, dass**
das Abdeckelement (40) aus mehreren unterteilten Körpern (40A, 40B) gebildet ist, in die das Abdeckelement (40) in Umfangsrichtung unterteilt ist.

2. Kugelumlaufspindel (1) nach Anspruch 1, wobei der Ausschnittteil (53) ein Paar von Ausschnittteilen aufweist, die an den Umlaufelementen (50) oder dem Mutterkörper (20A) in einer radialen Richtung ausgebildet sind.

3. Werkzeugmaschine mit der Kugelumlaufspindel (1) nach Anspruch 1 oder 2.

4. Fördervorrichtung mit der Kugelumlaufspindel (1) nach Anspruch 1 oder 2.

## Revendications

1. Vis à billes (1) comprenant :
un arbre de vis (10) avec une rainure hélicoïdale (11) formée sur sa surface périphérique externe ;
un corps d'écrou (20A) en forme de tube avec une rainure hélicoïdale (21) formée sur sa surface périphérique interne ;
des corps de roulement (30) configurés pour être placés dans un chemin de roulement de charge formée par la rainure hélicoïdale (11) de l'arbre de vis (10) et la rainure hélicoïdale (21) du corps d'écrou (20A), un chemin de guidage de corps de roulement (51) en communication avec le chemin de roulement de charge (60), et un chemin de retour de corps de roulement (70) en communication avec le chemin de guidage de corps de roulement (51) ;
des organes de circulation (50) configurés pour présenter le chemin de guidage de corps de roulement (51) formé à l'intérieur et être installés sur les deux extrémités du corps d'écrou (20A) dans une direction axiale ; et
un organe de revêtement (40) en résine synthétique configuré pour être formé en un tube agencé coaxialement avec le corps d'écrou (20A) pour couvrir une surface périphérique externe du corps d'écrou (20A), une partie rainure (41) formée sur sa surface périphérique interne et la surface périphérique externe du corps d'écrou (20A) formant le chemin de retour de corps de roulement (70),
dans laquelle l'organe de revêtement (40) est pourvu d'une partie de mise en prise (43) en prise avec une partie à encoche (53) formée sur des surfaces périphériques externes des organes de circulation (50) ou la surface périphérique externe du corps d'écrou (20A) pour empêcher l'organe de revêtement (40) de tourner dans une direction circonférentielle,
**caractérisée en ce que**
l'organe de revêtement (40) est composé d'une pluralité de corps divisés (40A, 40B) dans lesquels l'organe de revêtement (40) est divisé dans la direction circonférentielle.

2. Vis à billes (1) selon la revendication 1, dans laquelle la partie à encoche (53) inclut une paire de parties à encoche formées sur les organes de circulation (50) ou le corps d'écrou (20A) dans une direction radiale.

3. Machine-outil incluant la vis à billes (1) selon la revendication 1 ou 2.

4. Dispositif de transport incluant la vis à billes (1) selon la revendication 1 ou 2.
